# EUROPÄISCHE PATENTSCHRIFT

(11) **EP 2 208 275 B1**
(45) Veröffentlichungstag und Bekanntmachung des Hinweises auf die Patenterteilung: **03.10.2018**
(21) Anmeldenummer: 07819834.8
(22) Anmeldetag: 09.11.2007
(51) Int. Cl.: H02J 3/36, H02M 7/757

(54) **VORRICHTUNG ZUM REGELN EINER HOCHSPANNUNGSGLEICHSTROMÜBERTRAGUNGSANLAGE**
DEVICE FOR REGULATING A HIGH-VOLTAGE DIRECT-CURRENT TRANSMISSION SYSTEM
DISPOSITIF DE RÉGULATION D'UNE INSTALLATION DE TRANSMISSION DE COURANT CONTINU À HAUTE TENSION

(43) Veröffentlichungstag der Anmeldung: 21.07.2010
(73) Patentinhaber: Siemens Aktiengesellschaft, 80333 München (DE)
(72) Erfinder: BRANDT, Dennis, Manitoba R5A 1G2 (CA); MESSNER, Johann, 91056 Erlangen (DE); PRIEBE, Torsten, 91096 Möhrendorf (DE)
(86) Internationale Anmeldenummer: PCT/EP2007/009907
(87) Internationale Veröffentlichungsnummer: WO 2009/059629

(56) Entgegenhaltungen:
- US-A- 3 470 442
- BELVERDE G ET AL: "On the series connection of insulated gate power devices" DEVICES, CIRCUITS AND SYSTEMS, 2000. PROCEEDINGS OF THE 2000 THIRD IEE E INTERNATIONAL CARACAS CONFERENCE ON MARCH 15-17, 2000, PISCATAWAY, NJ, USA,IEEE, 15. März 2000 (2000-03-15), Seiten 343-348, XP010512082 ISBN: 978-0-7803-5766-2
- HASEGAWA T ET AL: "Development of a Thyristor Valve for Next Generation 500kV HVDC Transmission Systems" 1. Oktober 1996 (1996-10-01), IEEE TRANSACTIONS ON POWER DELIVERY, IEEE SERVICE CENTER, NEW YORK, NY, US, PAGE(S) 1783 - 1788 , XP011049230 ISSN: 0885-8977 Seite 1783; Abbildung 1 Seite 1786; Abbildungen 7,8

## Beschreibung

Die Erfindung betrifft eine Vorrichtung zum Regeln einer Hochspannungsgleichstromübertragungsanlage mit wenigstens einer Reihenschaltung aus Ventilgruppen, die jeweils steuerbare Leistungshalbleiter aufweisen, wobei die Vorrichtung wenigstens einen Stromsensor zum Erfassen eines über die Reihenschaltung fließenden Ventilgruppenstromes und wenigstens eine Stromreglereinheit aufweist, die mit wenigstens einem Stromsensor verbunden und zum Einstellen des Ventilgruppenstromes mittels Steuersignale eingerichtet ist.

Die Erfindung betrifft ferner eine Hochspannungsgleichstromübertragungsanlage mit einer solchen Vorrichtung.

Eine solche Vorrichtung und eine solche Hochspannungsgleichstromübertragungsanlage sind aus der US 3,470,442 bereits bekannt. Bei der dort gezeigten Hochspannungsgleichstromübertragungsanlage werden zwei Ventilgruppen, die in Reihenschaltung miteinander verbunden sind, von jeweils einer lokalen Regelungseinheit geregelt. Ferner ist eine Einheit beschrieben, die für jede lokale Regelungseinheit einen gemeinsamen Sollwert bereitstellt, der die übertragene Leistung festlegt. Die Regelung der örtlichen Steuerungseinheiten erfolgt jedoch ansonsten unabhängig voneinander.

Im Bereich der Energieübertragung und -verteilung ist es gängige Praxis, Wechselstrom durch einen Umrichter in Gleichstrom umzuwandeln und zu einem weiteren Umrichter zu übertragen, der den Gleichstrom wieder in Wechselstrom umwandelt. Die hierzu eingesetzten Umrichter umfassen in der Regel eine Ventilgruppe, die aus steuerbaren Leistungshalbleitern zusammengesetzt ist. Dabei sind die Leistungshalbleiter jeder Ventilgruppe zu einer Sechs-Puls- oder Zwölf-Puls-Brücke miteinander verschaltet. Üblicherweise ist zur Energieübertragung lediglich eine Ventilgruppe vorgesehen. Bei einigen Anwendungen kann es jedoch erforderlich sein, mehrere solcher Ventilgruppen in Reihe zueinander zu schalten. Die Steuerung der Umrichter erfolgt wahlweise mit Hilfe einer Stromregeleinheit, einer Gammaregeleinheit oder einer Spannungsregeleinheit. Bei der Regelung ist es insbesondere vorteilhaft, wenn die Regeleinheiten möglichst nahe an den zu steuernden Leistungshalbleitern angeordnet sind.

Sind Ventilgruppen zueinander in Reihe geschaltet, ist der über die Leistungshalbleiter der Ventilgruppen jeweils fließende Ventilgruppenstrom für jede Ventilgruppe der gleiche. Aufgrund von Messungenauigkeiten und Regelintoleranzen wurde davon absehen, jeder Ventilgruppe eine eigene Stromregeleinheit zuzuordnen, die beide eine gemeinsame Größe, nämlich den Reihenstrom, regeln. Gemäß dem Stand der Technik sind daher beide Ventilgruppen einer gemeinsamen Stromregeleinheit auf einer so genannten Polebene zugeordnet, wobei die gemeinsame Stromregeleinheit mit jeder Ventilgruppe verbunden ist und die jeweils zweckmäßigen Steuersignale auf die Leistungshalbleiter überträgt.

Der Lösung gemäß dem Stand der Technik haftet der Nachteil an, dass eine schnelle Datenkommunikationsverbindung zwischen der beiden Ventilgruppen gemeinsamen Stromregeleinheit und den anderen auf dem Gruppenlevel verbleibenden Regeleinheiten erforderlich ist. Trotz dieser schnellen Kommunikationsverbindung kommt es gemäß dem Stand der Technik jedoch zu unerwünschten Verzögerungen, bei der Datenkommunikation mit erhöhter Regelungsträgheit und einer herabgesetzten Stabilität der Regelung im Gefolge.

Aufgabe der Erfindung ist eine Vorrichtung der eingangs genannten Art bereitzustellen, die eine geringe Regelverzögerung und eine erhöhte Stabilität der Regelung bereitstellt.

Die Erfindung löst diese Aufgabe dadurch, dass für jede Ventilgruppe eine Stromregeleinheit vorgesehen ist, die zum Steuern der Leistungshalbleiter der ihm zugeordneten Ventilgruppe mit diesen verbunden ist, wobei jede Stromregeleinheit der Reihenschaltung mit einer Ausgleichseinheit verbunden ist, die zum aneinander Angleichen der Steuersignale der mit ihr verbundenen Stromregeleinheiten eingerichtet ist, wobei ein Ausgangssignal der Ausgleichseinheit einer Stromregelung jeder Stromregeleinheit aufgeschaltet wird, so dass die Stromregeleinheiten miteinander synchronisiert sind.

Erfindungsgemäß erfolgt die Stromregelung auf der Ebene der jeweiligen Ventilgruppen. Jede Ventilgruppe verfügt daher über ihre eigene Stromregeleinheit. Zur Vermeidung von einem unerwünschten Zeitversatz bei den Steuerungssignalen ist eine Ausgleichseinheit vorgesehen, die mit jeder Ventilgruppe der zugeordneten Reihenschaltung verbunden ist. Die Ausgleichseinheit erzeugt ein Ausgangssignal, das auf die jeweils verbundenen Stromregeleinheiten übertragen wird und der Stromregelung so aufgeschaltet wird, dass die Steuersignale der Stromregeleinheiten aneinander angeglichen werden. Unter dem Begriff "aneinander Angleichen" wird im Rahmen der Erfindung beispielsweise verstanden, dass zeitgleiche Zündwinkel von den Stromregeleinheiten erzeugt werden, an jeder Ventilgruppe die gleiche Spannung abfällt, der Strom durch jede Ventilgruppe der gleich ist oder dergleichen. Um ein entsprechendes Ausgangssignal erzeugen zu können, ist die Ausgleichseinheit eingangsseitig mit Ventilgruppensensoren verbunden, die jeweils einer Ventilgruppe zugeordnet sind. Die Messsignale der Ventilgruppensensoren werden zur Ausgleichseinheit übertragen, die in Abhängigkeit einer internen Logik auf der Grundlage der erfassten Messwerte der Ventilgruppensensoren das oder die Ausgangssignale erzeugt. Auf diese Art und Weise ist eine ortsnahe Stromregelung ermöglicht, wobei die Steuerungssignale der Stromregeleinheit der einzelnen Ventilgruppen miteinander synchronisiert sind. An den Ventilgruppen fällt beispielsweise eine Hochspannung von über 200kV ab.

Gemäß einer bevorzugten Ausgestaltung der Erfindung ist die Ausgleichseinheit mit Ventilgruppenspannungseinheiten verbunden, die jeweils einer Ventilgruppe zugeordnet und zum Ermitteln der an der zugeordneten Ventilgruppe abfallenden Ventilgruppenspannung eingerichtet sind. Eine Ventilgruppenspannungseinheit ist beispielsweise ein Spannungssensor. Der Spannungssensor misst die an einer Ventilgruppe abfallende Spannung beispielsweise unter Gewinnung von Ventilgruppenspannungsmesswerten, die an die Ausgleichseinheit übertragen werden. Die Ausgleichseinheit vergleicht die Ventilgruppenspannungsmesswerte der verschiedenen Ventilgruppen miteinander und erzeugt in Abhängigkeit des Vergleichs Ausgangssignale, welche an die den Ventilgruppen entsprechend zugeordnete Stromregeleinheit überführt wird, so dass die Ausgleichssignale für eine Synchronisation oder mit anderen Worten für ein Angleichen der Steuersignale der Ventilgruppen sorgen.

Mit einer abweichenden Ausgestaltung der Erfindung ist jede Ventilgruppenspannungseinheit mit zwei Spannungssensoren verbunden, wobei die Spannungssensoren beidseitig der Ventilgruppe angeordnet sind, welche der Ventilgruppenspannungseinheit zugeordnet ist und wobei die Spannungssensoren jeweils die gegenüber dem Erdpotenzial abfallende Spannung der jeweiligen Anschlussklemme der Ventilgruppe erfassen. Die auf diese Weise gewonnen Spannungswerte werden voneinander abgezogen, wobei die Differenz schließlich die an der Ventilgruppe abfallende Ventilgruppenspannung, also die Ventilgruppenanschlussspannung, ist.

Gemäß einer weiteren Ausgestaltung der Erfindung weist jede Reihenschaltung zwei Ventilgruppen und zwei Ventilgruppenspannungseinheiten auf, wobei die Ausgleichseinheit über einen Differenzbildner verfügt, der zum Bilden der Differenz der Ventilgruppenspannungen der mit ihm verbundenen Ventilgruppenspannungseinheiten eingerichtet ist. Gemäß dieser vorteilhaften Weiterentwicklung erfolgt das Angleichen der Ausgangssignale der Ausgangseinheit durch einfaches Differenzbilden der Ventilgruppenspannungen, so dass das erfindungsgemäße Regelverfahren besonders einfach und übersichtlich ist.

Zweckmäßigerweise umfasst die Ausgleichseinheit einen Ausgleichsregler, der eingangsseitig mit dem Differenzbildner und ausgangsseitig mit den Stromregeleinheiten verbunden ist. Die Stromregeleinheit schaltet das Ausgangssignal der Ausgangseinheit vorzeichenabhängig einer Stromregelgröße oder einer Führungsgröße der Regelung auf. Ist beispielsweise eine Ventilgruppenspannung größer als die andere und wird die größere Ventilgruppenspannung von der kleineren Ventilgruppenspannung durch den Differenzbildner der Ausgleichseinheit abgezogen, ergibt sich ein negatives Ausgangssignal der Ausgleichseinheit, wobei das negative Ausgleichssignal derjenigen Stromregeleinheit aufgeschaltet wird, an der die höhere Ventilgruppenspannung abfällt. Die Stromregeleinheit, die der Ventilgruppe mit der kleineren Ventilgruppenspannung zugeordnet ist, schaltet hingegen das negative Ausgangssignal der Ausgleichseinheit der Regelgröße der besagten Stromregeleinheit auf. Somit werden die Ventilgruppenspannungen aneinander angepasst.

Zweckmäßigerweise sind die Leistungshalbleiter nichtabschaltbare Thyristoren. Thyristoren haben sich als Leistungshalbleiter insbesondere bei hohen Leistungen am Markt bislang durchgesetzt. Abweichend hiervon umfassen die Leistungshalbleiter abschaltbare Leistungshalbleiter, wie beispielsweise IGBTs, GTOs und dergleichen, denen zum Beispiel eine Freilaufdiode parallel geschaltet ist.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleiche Bauteile verweisen und wobei
- Figur 1: einen Umrichter einer Hochspannungsgleichstromübertragung mit mehreren Reihenschaltungen und mehreren Ventilgruppen in schematischer Darstellung und
- Figur 2: ein Ausführungsbeispiel der erfindungsgemäßen Vorrichtung zeigen.

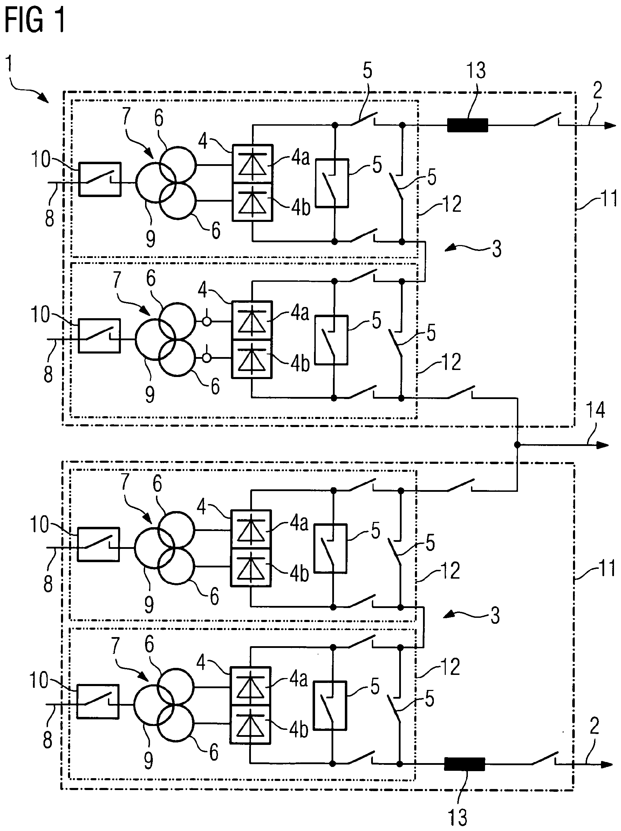

Figur 1 zeigt einen Umrichter 1, der über einen Gleichspannungskreis 2 mit einem weiteren nicht gezeigten Umrichter verbunden ist. Der Umrichter 1 weist zwei Reihenschaltungen 3 aus Ventilgruppen 4 auf, die jeweils durch Gleichspannungsschalter 5 überbrückbar sind. Die Ventilgruppen 4 sind als so genannte Zwölf-Puls-Brückenschaltungen ausgestaltet, umfassen also zwei in Reihe zueinander geschaltete Sechs-Puls-Brücken 4a und 4b, die jeweils mit einer Sekundärwicklung 6 eines Hochspannungsgleichstromübertragungstransformators 7 verbunden sind. Darüber hinaus verfügt der Hochspannungsgleichstromübertragungstransformator 7 über eine mit einem Wechselspannungsnetz 8 verbundene Primärwicklung 9. Es sei darauf hingewiesen werden soll, dass das Wechselspannungsnetz dreiphasig ausgebildet ist, in Figur 1 jedoch aus Gründen der Übersichtlichkeit lediglich eine Phase gezeigt ist. Die Phasensekundärwicklungen 6 des Hochspannungsgleichstromübertragungstransformators sind unterschiedlich miteinander verschaltet, so dass eine Phasendifferenz bereitgestellt ist.

Das Wechselspannungsnetz 8 ist mittels eines Wechselspannungsschalters 10 vom Umrichter 1 abtrennbar. Jede Reihenschaltung 3 aus Halbleiterventilen 4 und die zugehörigen Komponenten, wie Hochspannungsgleichstromübertragungstransformator, Wechselspannungsschalter und Gleichspannungsschalter, werden auch als Pol 11 bezeichnet. Die einer Ventilgruppe 4 zuordenbaren Komponenten bilden hingegen eine Gruppeneinheit 12 aus.

Zum Glätten der Gleichspannung sind im Gleichspannungskreis zwei Glättungsdrosseln 13 angeordnet. Ferner ist in dem gezeigten Ausführungsbeispiel eine Elektrodenleitung 14 gezeigt, die zur Verbindung des Umrichters 1 mit einer figürlich nicht dargestellten Erdelektrode dient. Aufgrund dieser Erdung ist bei Ausfall einer der Leitungen des Gleichspannungskreises 2 ein Stromfluss über Erde ermöglicht, so dass die Energieübertragung trotz Ausfall der besagten Leitung fortgesetzt werden kann.

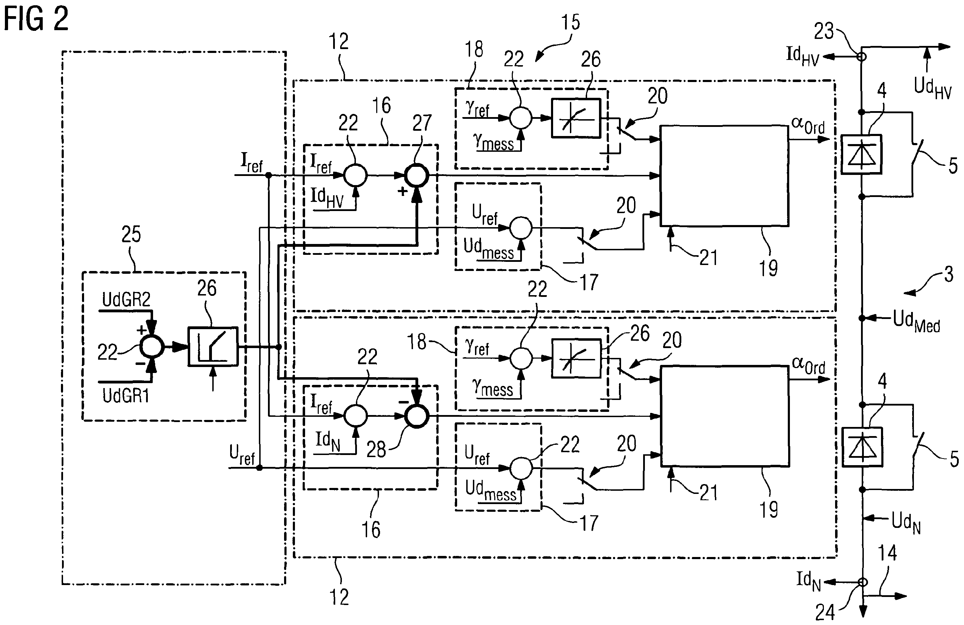

Figur 2 zeigt ein Ausführungsbeispiel der erfindungsgemäßen Vorrichtung 15, die zum Regeln einer in Figur 1 gezeigten Hochspannungsgleichstromübertragungsanlage 1 eingerichtet ist. Die Vorrichtung 15 umfasst eine Stromregeleinheit 16, eine Spannungsregeleinheit 17 sowie eine Gammaregeleinheit 18. Die besagten Regeleinheiten sind mit einem PI-Regler 19 verbunden, der mit den in Figur 2 nicht gezeigten Thyristorventilen der zugeordneten Ventilgruppe 4 verbunden ist. Der PI-Regler 19 stellt in Abhängigkeit seiner Eingangsgröße einen Zündwinkel α_{Ord} als Steuersignal für die Leistungshalbleiter bereit. Weiterhin sind Auswahlschalter 20 offenbart, mit denen die entsprechende Regeleinheit zugeschaltet beziehungsweise weggeschaltet werden kann. Als viertes Eingangssignal ist eine Gleichrichter-/Wechselrichtersignalleitung 21 vorgesehen, mit der bestimmt wird, ob der Umrichter 1 als Wechselrichter oder als Gleichrichter arbeitet. In dem in Figur 2 gezeigten Ausführungsbeispiel umfasst jede Stromregeleinheit 16, jede Spannungsregeleinheit 17 sowie jede Gammaregeleinheit 18 jeweils einen Differenzbildner 22, mit dem jeweils ein gemessener Istwert von einem Sollwert abgezogen wird oder umgekehrt.

Die Istwerterfassung erfolgt durch geeignete Messsensoren, die jeweils einer Ventilgruppe 4 zugeordnet sind. So wird beispielsweise der über die Reihenschaltung 3 fließende Strom mit dem Messsensor 23 als Hochspannungsgleichstrommesswert Id_{HV} sowie dem Stromsensor 24 als Niederspannungsgleichstrommesswerte Id_{N} erfasst. Der Hochspannungsgleichstrommesswert Id_{HV} sowie der Niedergleichspannungsstrommesswert Id_{N} werden jeweils dem der Ventilgruppe 4 zugeordneten Stromregeleinheit 16 als Istwert zugeführt, wobei die Differenzeinheit 22 die Differenz zu einem vorgegebenen Sollwert I_{ref} berechnet. Die Spannung wird an drei Messstellen des Pols als Niederspannungsventilgruppenspannung Ud_{N}, Mittelspannungsventilgruppenspannung Ud_{Med} und als Hochspannungsventilgruppenspannung Ud_{HV} erfasst.

Die zur besagten Spannungsmessung erforderlichen Messsensoren sind mit einer Ausgleichseinheit 25 verbunden, die mit einer internen Logik ausgerüstet ist, um aus den gemessenen Spannungswerten durch zweckmäßige Differenzbildung die an der jeweiligen Ventilgruppe 4 abfallende Ventilgruppenspannung UdGR1 beziehungsweise UdGR2 zu berechnen. Die Auswahleinheit 25 verfügt ferner über einen Differenzbildner 22, der die Differenz aus den Ventilgruppenspannungen bildet. Schließlich umfasst die Ausgleichseinheit 25, wie die Gammaregeleinheit 18, eine variable Verstärkungseinheit 26, die für eine zweckmäßige nicht lineare Reaktion der Regelung bewirkt. Ausgangsseitig ist die Ausgleichseinheit 25 mit einem Addierer 27 der ersten Ventilgruppe 4 und einem Differenzbildner 28 der zweiten Ventilgruppe 4 verbunden. Ist die an der zweiten Ventilgruppe abfallende Spannung UdGR2 größer als die an der ersten Ventilgruppe abfallende Spannung UdGR1, kommt es zu einem positiven Ausgangssignal der Auslöseeinheit 25. Das positive Ausgangssignal wird somit der Regelgröße der ersten Stromregeleinheit 16 aufgeschaltet. Es kommt somit zu einem Erhöhen des Stromflusses mit einem Spannungsanstieg UdGR1 im Gefolge. Mit dem Subtrahierer 28 wird das positive Ausgangssignal der Ausgleichseinheit 25 jedoch von der Regelgröße der Stromregeleinheit der zweiten Ventilgruppe 4 abgezogen. Die Regelung der Leistungshalbleiter zielt somit auf eine Verringerung der Ventilgruppenspannung der zweiten Ventilgruppe ab.

Die auf der Ebene der Polregelung angeordnete Ausgleichseinheit sorgt somit für ein Aneinanderangleichen der Zündwinkel und somit zu einer Synchronisation der Stromregeleinheiten 16, die mit ihr verbunden sind.

## Patentansprüche

1. Vorrichtung (15) zum Regeln einer Hochspannungsgleichstromübertragungsanlage mit wenigstens einer Reihenschaltung (3) aus Ventilgruppen (4), die jeweils steuerbare Leistungshalbleiter aufweisen, wobei die Vorrichtung (15) wenigstens einen Stromsensor (23,24) zum Erfassen eines über die Reihenschaltung (3) fließenden Ventilgruppenstromes Id_{HV}, Id_{N} und wenigstens eine Stromreglereinheit (16) aufweist, die mit wenigstens einem Stromsensor verbunden und zum Einstellen des Ventilgruppenstromes Id_{HV}, Id_{N} mittels Steuersignale eingerichtet ist,
wobei für jede Ventilgruppe (4) eine Stromregeleinheit (16) vorgesehen ist, die zum Steuern der Leistungshalbleiter der ihm zugeordneten Ventilgruppe (4) mit diesen verbunden ist, **dadurch gekennzeichnet, dass** jede Stromregeleinheit (16) der Reihenschaltung (3) mit einer Ausgleichseinheit (25) verbunden ist, die zum aneinander Angleichen der Steuersignale der mit ihr verbundenen Stromregeleinheiten (16) eingerichtet ist, wobei ein Ausgangssignal der Ausgleichseinheit einer Stromregelung jeder Stromregeleinheit aufgeschaltet wird, so dass die Steuersignale der Stromregeleinheiten miteinander synchronisiert sind.

2. Vorrichtung (15) nach Anspruch 1,
**dadurch gekennzeichnet, dass** die Ausgleichseinheit (25) mit Ventilgruppenspannungseinheiten verbunden ist, die jeweils einer Ventilgruppe (4) zugeordnet und zum Ermitteln der an der zugeordneten Ventilgruppe (4) abfallenden Ventilgruppenspannung eingerichtet sind.

3. Vorrichtung (15) nach Anspruch 2,
**dadurch gekennzeichnet, dass** die Ventilgruppenspannungseinheit ein Spannungssensor ist.

4. Vorrichtung (15) nach Anspruch 2,
**dadurch gekennzeichnet, dass** jede Ventilgruppenspannungseinheit mit zwei Spannungssensoren verbunden ist, wobei die Spannungssensoren beidseitig der Ventilgruppe angeordnet sind, welche der Ventilgruppenspannungseinheit zugeordnet ist, und wobei die Spannungssensoren jeweils die gegenüber dem Erdpotenzial abfallende Spannung erfassen.

5. Vorrichtung (15) nach Anspruch 2,
**dadurch gekennzeichnet, dass** jede Reihenschaltung (3) zwei Ventilgruppen (4) und zwei Ventilgruppenspannungseinheiten aufweist, wobei die Ausgleichseinheit (25) über einen Differenzbildner (23) verfügt, der zum Bilden der Differenz der Ventilgruppenspannungen UdGr1, UdGr2 der mit ihm verbundenen Ventilgruppenspannungseinheiten eingerichtet ist.

6. Vorrichtung (15) nach Anspruch 5,
**dadurch gekennzeichnet, dass** die Ausgleichseinheit (25) einen Ausgleichsregler (26) umfasst, der eingangsseitig mit dem Differenzbildner (22) und ausgangsseitig mit den Stromregeleinheiten (16) verbunden ist.

7. Vorrichtung (15) nach Anspruch 6,
**dadurch gekennzeichnet, dass** jede Stromregeleinheit (16) das Ausgangssignal der Ausgleichseinheit (25) vorzeichenabhängig einer Stromregelgröße aufschaltet.

8. Vorrichtung (15) nach einem der vorhergehenden Ansprüche, **dadurch gekennzeichnet, dass** die Leistungshalbleiter nicht abschaltbare Thyristoren sind.

9. Hochspannungsgleichstromübertragungsanlage mit zwei über einen Gleichspannungszwischenkreis (2) verbundenen Umrichtern (1), wobei jeder Umrichter (1) wenigstens eine Reihenschaltung (3) aus Ventilgruppen (4) mit steuerbaren Leistungshalbleitern aufweist, wobei eine Vorrichtung (15) gemäß einem der vorhergehenden Ansprüche zum Regeln der Leistungshalbleiter vorgesehen ist.

## Claims

1. Apparatus (15) for regulating a high voltage direct current transmission installation having at least one series circuit (3) comprising valve groups (4) which each have controllable power semiconductors, wherein the apparatus (15) has at least one current sensor (23, 24) for detection of a valve group current Id_{HV}, Id_{N} flowing via the series circuit (3), and at least one current regulator unit (16) which is connected to at least one current sensor and is used to adjust the valve group current Id_{HV}, Id_{N} by means of control signals,
wherein
one current regulation unit (16) is provided for each valve group (4) and is connected to the power semiconductors of the valve group (4) associated with it in order to control these power semiconductors,
**characterized in that**
each current regulation unit (16) in the series circuit (3) is connected to an equalizing unit (25), which is designed to match to one another the control signals for the current regulation units (16) which are connected to it, wherein an output signal from the equalizing unit is applied to a current regulation of each current regulation unit, in such a way that the control signals of the current regulation units are synchronized to one another.

2. Apparatus (15) according to Claim 1,
**characterized in that**
the equalizing unit (25) is connected to valve group voltage units which are each associated with one valve group (4) and are designed to determine the valve group voltage which is dropped across the associated valve group (4).

3. Apparatus (15) according to Claim 2,
**characterized in that**
the valve group voltage unit is a voltage sensor.

4. Apparatus (15) according to Claim 2,
**characterized in that**
each valve group voltage unit is connected to two voltage sensors, wherein the voltage sensors are arranged on both sides of the valve group which is associated with the valve group voltage unit, and wherein the voltage sensors each detect the voltage which is dropped with reference to ground potential.

5. Apparatus (15) according to Claim 2,
**characterized in that**
each series circuit (3) has two valve groups (4) and two valve group voltage units, wherein the equalizing unit (25) has a subtractor (23) which is designed to form the difference between the valve group voltages UdGr1, UdGr2 of the valve group voltage units which are connected to it.

6. Apparatus (15) according to Claim 5,
**characterized in that**
the equalizing unit (25) has an equalizing regulator (26) which is connected on the input side to the subtractor (22) and on the output side to the current regulation units (16).

7. Apparatus (15) according to Claim 6,
**characterized in that**
each current regulation unit (16) switches on the output signal from the equalizing unit (25) as a function of the mathematical sign of a current controlled variable.

8. Apparatus (15) according to one of the preceding claims, **characterized in that**
the power semiconductors are thyristors which cannot be switched off.

9. High voltage direct current transmission installation having two converters (1) which are connected via a DC voltage intermediate circuit (2), wherein each converter (1) has at least one series circuit (3) comprising valve groups (4) with controllable power semiconductors, wherein an apparatus (15) according to one of the preceding claims is provided in order to regulate the power semiconductors.

## Revendications

1. Dispositif (15) de régulation d'une installation de transport de courant continu en haute tension, comprenant au moins un montage (3) en série de groupes (4) de soupapes, qui ont chacun des semi-conducteurs de puissance pouvant être commandés, le dispositif (15) ayant au moins un capteur (23, 24) de courant pour détecter un courant Id_{HV}N Id_{N} de groupes de soupapes passant par le montage en série et au moins une unité (16) de régleur de courant, qui est reliée au au moins un capteur de courant et qui est conçue pour régler le courant Id_{HV}, Id_{N} de groupes de soupapes au moyen de signaux de commande,
dans lequel,
pour chaque groupe (4) de soupapes est prévue une unité (16) de réglage du courant, qui, pour commander les interrupteurs de puissance du groupe (4) de soupape qui lui est associé, est reliée à ceux-ci,
**caractérisé en ce que**
chaque unité (16) de réglage du courant du montage (3) en série est reliée à une unité (25) de compensation, qui est conçue pour équilibrer les signaux de commande des unités (16) de réglage qui y sont reliées, un signal de sortie de l'unité de compensation étant appliqué à une régulation de courant de chaque unité de réglage du courant, de manière à synchroniser, entre eux, les signaux de commande des unités de réglage du courant.

2. Dispositif (15) suivant la revendication 1,
**caractérisé en ce que**
l'unité (25) de compensation est reliée à des unités de tension de groupe de soupapes, qui sont associées chacune à un groupe (4) de soupapes et qui sont conçues pour déterminer la tension de groupe de soupapes aux bornes du groupe (4) de soupapes associé.

3. Dispositif (15) suivant la revendication 2,
**caractérisé en ce que**
l'unité de tension de groupe de soupapes est un capteur de tension.

4. Dispositif (15) suivant la revendication 2,
**caractérisé en ce que**
chaque unité de tension de groupe de soupapes est reliée à deux capteurs de tension, les capteurs de tension étant montés de part et d'autre du groupe de soupapes, qui est associé à l'unité de tension de groupe de soupapes et dans lequel les capteurs de tension détectent chacun la tension par rapport au potentiel de terre.

5. Dispositif (15) suivant la revendication 2,
**caractérisé en ce que**
chaque montage (3) en série a deux groupes (4) de soupapes et deux unités de tension de groupe de soupapes, l'unité (25) de compensation disposant d'un dispositif (23) de formation d'une différence, conçu pour former la différence entre les tensions UdGr1, UdGr2 de groupe de soupapes des unités de tension de groupe de soupapes, qui lui est relié.

6. Dispositif (15) suivant la revendication 5,
**caractérisé en ce que**
l'unité (25) de compensation comprend un régleur (26) de compensation, qui est relié du côté de l'entrée au dispositif (22) de formation d'une différence et du côté de la sortie aux unités (16) de réglage de courant.

7. Dispositif (15) suivant la revendication 6,
**caractérisé en ce que**
chaque unité (16) de réglage de courant applique le signal de sortie de l'unité (25) de compensation en fonction du signe d'une grandeur de réglage du courant.

8. Dispositif (15) suivant l'une des revendications précédentes,
**caractérisé en ce que**
les semi-conducteurs de puissance sont des thyristors ne pouvant pas être bloqués.

9. Installation de transport de courant continu en haute tension, ayant deux convertisseurs (1) reliés par un circuit (2) intermédiaire de tension continue, chaque convertisseur (1) ayant au moins un montage (3) en série de groupe (4) de soupapes à semi-conducteur de puissance pouvant être commandé, dans laquelle il est prévu un dispositif (15) suivant l'une des revendications précédentes pour régler les semi-conducteurs de puissance.
